# EUROPEAN PATENT APPLICATION

(11) **EP 3 034 967 A1**
(43) Date of publication of application: **22.06.2016**
(21) Application number: 15199714.5
(22) Date of filing: 14.12.2015
(51) Int. Cl.: F25B 49/02, F25B 47/02

(54) **CONTROL DEVICE, CONTROL METHOD, AND PROGRAM**

(30) Priority: 17.12.2014 JP 2014254949
(71) Applicant: MITSUBISHI HEAVY INDUSTRIES, LTD., Tokyo (JP)
(72) Inventor: SUMIYA, Atsuyuki, TOKYO (JP); SHIMIZU, Kenji, TOKYO (JP)
(74) Representative: Intès, Didier Gérard André

(57) **Abstract**

A control device includes a refrigerant circuit controller (217) and a power element controller (218). The refrigerant circuit controller (217) increases a temperature of a heat exchanger (201) in a cooling operation. The cooling operation is temporarily performed during a heating operation. The power element controller (218) increases a loss of a power element in the cooling operation compared with a loss of the power element in the heating operation. The power element forms an inverter circuit (3) that controls a compressor motor (210).

## Description

### BACKGROUND OF THE INVENTION

### Field of the Invention

The invention relates to a control device, a control method, and a program for implementing such a method.

### Description of Related Art

In a refrigerant circuit of an air conditioning unit, a control called a defrost control for temporarily performing a cooling operation in order to prevent freezing or frosting in a heat exchanger of an outdoor unit in a heating operation is performed.

Japanese Unexamined Patent Application, First Publication No. 2010-025374 (hereinafter, referred to as Patent Literature 1) discloses related art. A device disclosed in Patent Literature 1 determines condensation in the vicinity of a power element when a cooling operation is switched to a heating operation. When the condensation occurs, the device reduces the occurrence of condensation by increasing a temperature of the power element.

### SUMMARY OF THE INVENTION

When a defrost control is performed in a refrigerant circuit of an air conditioning unit, a portion that is in a high temperature state in the refrigerant circuit may temporarily enter a low temperature state. When a power element is present at the portion, the temperature of the power element is greatly changed, and thus, the lifetime of the power element is shortened.

An object of the invention is to provide a control device, a control method, and a program capable of solving these problems.

According to a first aspect of the invention, a control device includes: a refrigerant circuit controller that increases a temperature of a heat exchanger in a cooling operation, the cooling operation being temporarily performed during a heating operation; and a power element controller that increases a loss of a power element in the cooling operation compared with a loss of the power element in the heating operation, the power element forming an inverter circuit that controls a compressor motor.

According to a second aspect of the invention, in the control device according to the first aspect of the invention, the power element controller may increase a switching frequency of the inverter circuit in the cooling operation compared with a switching frequency of the inverter circuit in the heating operation.

According to a third aspect of the invention, in the control device according to the first or second aspect of the invention, the power element controller may control the compressor motor in a three-phase modulation manner in the cooling operation, and the power element controller controls the compressor motor in a two-phase modulation manner in the heating operation.

According to a fourth aspect of the invention, in the control device according to the first or third aspect of the invention, the power element controller may decrease a power factor of the inverter circuit in the cooling operation compared with a power factor of the inverter circuit in the heating operation.

According to a fifth aspect of the invention, a control method includes: increasing a temperature of a heat exchanger in a cooling operation, the cooling operation being temporarily performed during a heating operation; and increasing a loss of a power element in the cooling operation compared with a loss of the power element in the heating operation, the power element forming an inverter circuit that controls a compressor motor.

The invention also relates to a computer program product loadable directly into a memory of a computing system, comprising software code portions for the execution of the control method according to the fifth aspect of the invention when said program is executed on said computing system.

The invention also relates to a medium readable by a computing system, having computer-executable instructions adapted for effecting the execution by the computing system of the control method according to the fifth aspect of the invention.

According to a sixth aspect of the invention, a program causes a computer to execute: increasing a temperature of a heat exchanger in a cooling operation, the cooling operation being temporarily performed during a heating operation; and increasing a loss of a power element in the cooling operation compared with a loss of the power element in the heating operation, the power element forming an inverter circuit that controls a compressor motor.

According to the control device, the control method, and the program, it is possible to reduce a large temperature change in the power element, generated when performing a defrost control for temporarily performing a cooling operation in a heating operation, in a refrigerant circuit.

### BRIEF DESCRIPTION OF THE DRAWINGS

FIG. 1 is a diagram illustrating a configuration of a cooling circuit according to an embodiment of the invention.
FIG. 2 is a diagram illustrating a configuration of a control device according to the embodiment of the invention.
FIG. 3 is a side view of a drive circuit according to the embodiment of the invention when seen in a direction orthogonal to an axis of a refrigerant pipe.
FIG. 4 is a top view of the drive circuit according to the embodiment of the invention.
FIG. 5 is a side view of the refrigerant pipe of the drive circuit according to the embodiment of the invention when seen in an axial direction.
FIG. 6 is a diagram illustrating moderation of a temperature change in a power element according to the embodiment of the invention.
FIG. 7 is a diagram illustrating lengthening of a lifetime of the power element according to the embodiment of the invention.

### DETAILED DESCRIPTION OF THE INVENTION

### (Embodiments)

Hereinafter, embodiments of the invention will be described in detail with reference to the accompanying drawings.

A configuration of a refrigerant circuit that includes a control device according to an embodiment of the invention will be described.

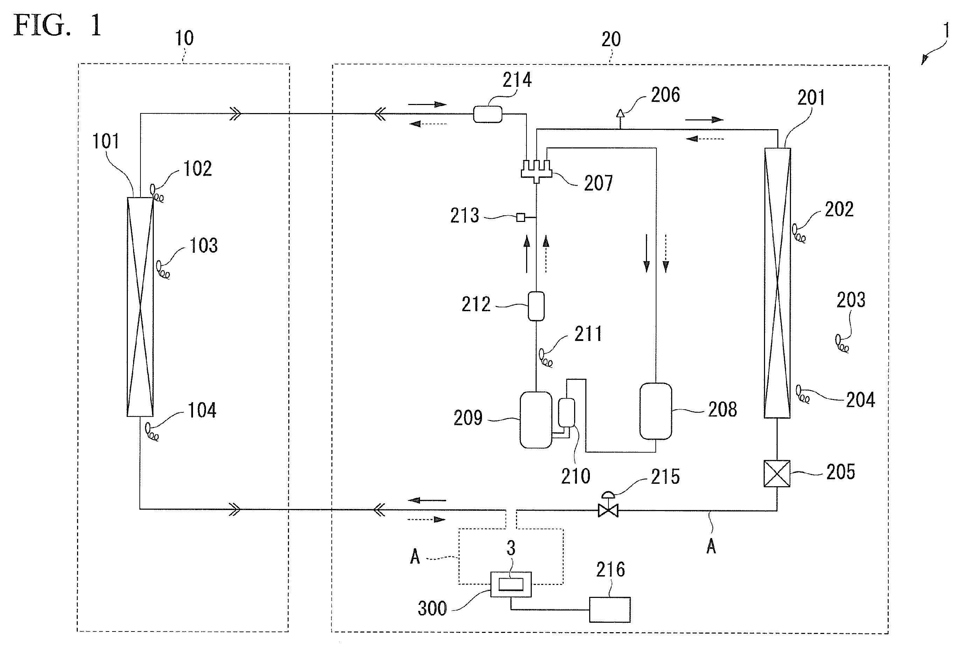

As shown in FIG. 1, a refrigerant circuit 1 according to the embodiment includes an indoor unit 10 and an outdoor unit 20.

The indoor unit 10 includes a heat exchanger 101, an inlet sensor 102, a heat exchanger sensor 103, and a heat exchanger sensor 104.

The heat exchanger 101 functions as a condenser in a heating operation. The heat exchanger 101 functions as an evaporator in a cooling operation.

The inlet sensor 102 is provided in the heat exchanger 101. The inlet sensor 102 detects a temperature of inlet gas input into the heat exchanger 101.

The heat exchanger sensor 103 and the heat exchanger sensor 104 are provided in the heat exchanger 101 of the indoor unit 10. The heat exchanger sensor 103 and the heat exchanger sensor 104 detect a temperature of the heat exchanger 101.

The heat exchanger sensor 103 and the heat exchanger sensor 104 detect temperatures of different portions in the heat exchanger 101, respectively.

The outdoor unit 20 includes a heat exchanger 201, an outside temperature sensor 202, a heat exchanger sensor 203, a heat exchanger sensor 204, an overcooling heat exchanger 205, a check joint 206, a four-way valve 207, an accumulator 208, a compressor 209, a compressor motor 210, a discharge pipe sensor 211, a muffler 212, a high pressure switch 213, a muffler 214, an electronic expansion valve 215, and a control device 216.

The heat exchanger 201 functions as an evaporator in a heating operation. The heat exchanger 201 functions as a condenser in a cooling operation.

The outside temperature sensor 202 is provided in the heat exchanger 201 of the outdoor unit 20. The outside temperature sensor 202 detects a temperature of air outside the heat exchanger 201.

The heat exchanger sensor 203 and the heat exchanger sensor 204 are provided in the heat exchanger 201 of the outdoor unit 20. The heat exchanger sensor 203 and the heat exchanger sensor 204 detect a temperature of the heat exchanger 201.

The heat exchanger sensor 203 and the heat exchanger sensor 204 detect temperatures of different portions in the heat exchanger 201, respectively.

The overcooling heat exchanger 205 is provided between the heat exchanger 201 and the electronic expansion valve 215. The overcooling heat exchanger 205 overcools a liquid refrigerant.

The check joint 206 is provided between the heat exchanger 201 and the four-way valve 207. The overcooling heat exchanger 205 performs refrigerant filling or the like.

The four-way valve 207 includes four valves. One of four valves of the four-way valve 207 is connected to the heat exchanger 201 through the check joint 206. Another one of four valves of the four-way valve 207 is connected to the accumulator 208. Still another one of the four valves of the four-way valve 207 is connected to the heat exchanger 101 through the muffler 214. The remaining one of the four valves of the four-way valve 207 is connected to the compressor 209 through the high pressure switch 213 and the muffler 212.

The accumulator 208 is provided between the four-way valve 207 and the compressor motor 210. The accumulator 208 prevents a refrigerant which is not gasified by the evaporator from flowing into the compressor 209 in a liquid state.

The compressor 209 is provided between the compressor motor 210 and the muffler 212. The compressor motor 210 is a power source of the compressor 209. The compressor 209 turns a gas refrigerant at a low temperature and a low pressure into a gas refrigerant at a high temperature and a high pressure.

The compressor motor 210 is provided between the accumulator 208 and the compressor 209. The compressor motor 210 operates the compressor 209.

The discharge pipe sensor 211 is provided on a discharge pipe between the compressor 209 and the muffler 212. The discharge pipe sensor 211 detects a temperature of the discharge pipe.

The muffler 212 is provided between the compressor 209 and the high pressure switch 213. The muffler 212 reduces pulsation of a refrigerant discharged by the compressor 209.

The high pressure switch 213 is provided between the muffler 212 and the four-way valve 207. The high pressure switch 213 is in a closed state when the pressure of a gas refrigerant output from the muffler 212 is equal to or lower than a predetermined pressure. The high pressure switch 213 enters an opened state when the pressure of the gas refrigerant output by the muffler 212 exceeds the predetermined pressure.

The muffler 214 is provided between the heat exchanger 101 and the four-way valve 207. The muffler 214 reduces pulsation of a refrigerant between the heat exchanger 101 and the four-way valve 207.

The electronic expansion valve 215 is provided between the overcooling heat exchanger 205 and the heat exchanger 101. The electronic expansion valve 215 turns an input liquid refrigerant at a certain temperature T and a certain pressure P into a refrigerant at a temperature lower than the temperature T and a pressure lower than the pressure P.

An aluminum block 300 to which a drive circuit 3 is fixed is disposed to be in contact with a refrigerant pipe A between the electronic expansion valve 215 and the heat exchanger 101. When a refrigerant having a lower temperature than that of the drive circuit 3 flows in the refrigerant pipe A, the drive circuit 3 is cooled. The drive circuit 3 is a circuit configured by a power element, as described later. For example, the drive circuit 3 is an inverter circuit configured by a power transistor such as an insulated gated bipolar transistor (IGBT) that drives the compressor motor 210.

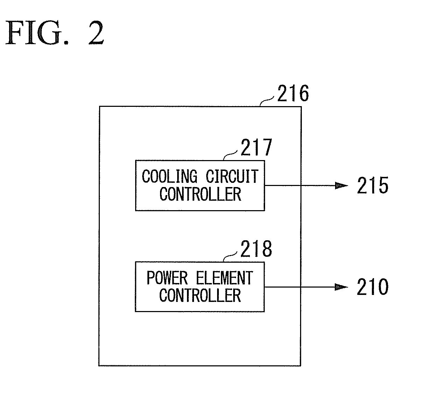

The control device 216 includes a refrigerant circuit controller 217 and a power element controller 218, as shown in FIG. 2.

The refrigerant circuit controller 217 controls respective functional parts of the refrigerant circuit 1 so that an indoor temperature becomes a desired temperature based on detection results from the inlet sensor 102, the heat exchanger sensor 103, the heat exchanger sensor 104, the outside temperature sensor 202, the heat exchanger sensor 203, the heat exchanger sensor 204, and the discharge pipe sensor 211. For example, the refrigerant circuit controller 217 controls a valve opening degree of the electronic expansion valve 215 to perform decompression adjustment and flow rate adjustment for a liquid refrigerant. The refrigerant circuit controller 217 performs a defrost control for temporarily performing a cooling operation when an ambient temperature of the overcooling heat exchanger 205 is equal to or lower than a predetermined temperature in a heating operation in the refrigerant circuit 1. For example, the refrigerant circuit controller 217 performs the defrost control when a temperature sensor provided in the vicinity of the overcooling heat exchanger 205 detects a temperature which is equal to or lower than the predetermined temperature.

The power element controller 218 performs a control for increasing a loss of the power element compared with that in the heating operation while the refrigerant circuit controller 217 is performing the defrost control. For example, the power element controller 218 controls the power element so that the frequency of electric current supplied to the compressor motor 210 by the drive circuit 3 is increased compared with that in the heating operation while the refrigerant circuit controller 217 is performing the defrost control. Further, for example, the power element controller 218 controls the power element so that the drive circuit 3 controls the compressor motor 210 in a three-phase modulation manner while the refrigerant circuit controller 217 is performing the defrost control. The power element controller 218 controls the power element so that the drive circuit 3 controls the compressor motor 210 in a two-phase modulation manner in the heating operation. Further, for example, the power element controller 218 controls the power element so that a power factor of the drive circuit 3 is reduced compared with that in the heating operation while the refrigerant circuit controller 217 is performing the defrost control. Specifically, the power element controller 218 increases a phase difference between voltage and current in the drive circuit 3 to perform the control of reducing the power factor of the drive circuit 3.

The drive circuit 3 controlled by the power element controller 218 will be described.

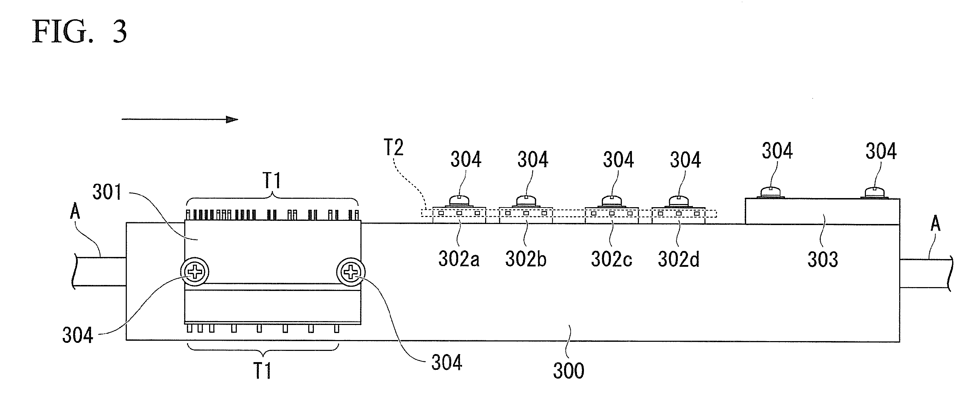

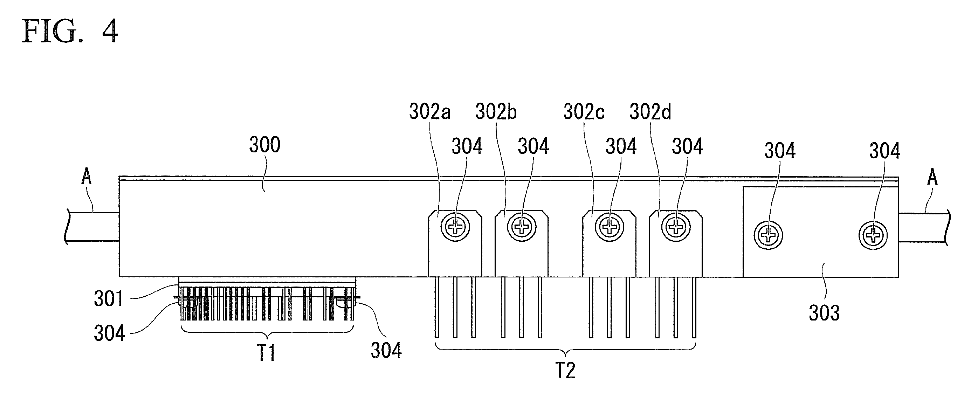

As shown in FIGS. 3 to 5, the drive circuit 3 includes an intelligent power module 301, power transistors 302 (302a, 302b, 302c, 302d, and the like), and a diode 303.

The intelligent power module 301 has a configuration in which a drive circuit configured by a power element such as an IGBT or a power metal oxide semiconductor field effect transistor (MOSFET), a protective circuit, and the like are sealed by a single case. The case is formed of a molded resin or the like, and is also referred to as a package. The intelligent power module 301 includes plural terminals T1.

Each power transistor 302 is a transistor such as an IGBT or a power MOSFET. The power transistors 302 are sealed by a single case. Each power transistor 302 includes plural terminals T2. For example, when the power transistor 302 is an IGBT, each power transistor 302 includes three terminals of a gate, a collector, and an emitter. When the power transistor 302 is a power MOSFET, each power transistor 302 includes three terminals of a gate, a drain, and a source.

The diode 303 is an element that allows electric current to flow in a direction in which a P-type semiconductor and an N-type semiconductor are connected to each other. The diode 303 is sealed by a single case. The diode 303 includes two terminals of an anode and a cathode. The respective terminals of the drive circuit 3 are connected to components such as the compressor motor 210 which is a driving target in the refrigerant circuit 1 and to the power element controller 218. The intelligent power module 301 drives the components which are the driving target under the control of the power element controller 218.

The drive circuit 3 is fixed to the aluminum block 300 made of aluminum through screws 304. Silicone grease or the like is coated between the case of each power element that forms the drive circuit 3 and the aluminum block 300. The coating enhances thermal conductivity between the case of each power element that forms the drive circuit 3 and the aluminum block 300.

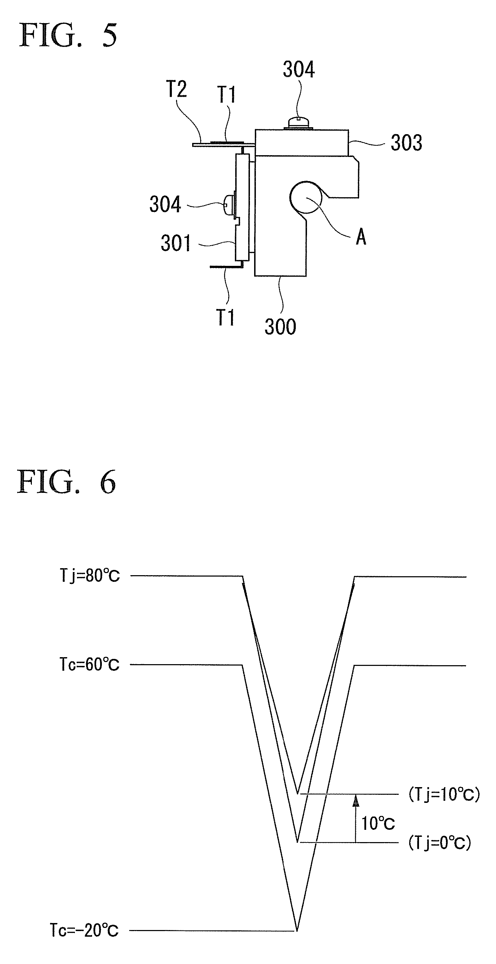

The aluminum block 300 to which the drive circuit 3 is fixed is mounted to be in contact with and to surround the refrigerant pipe A as illustrated in FIG. 5. If a refrigerant flows inside the refrigerant pipe A, heat of the refrigerant is transferred to the refrigerant pipe A. The heat of the refrigerant pipe A is transferred to the aluminum block 300. The heat of the aluminum block 300 is transferred to the drive circuit 3. The drive circuit 3 generally generates heat at a high temperature. The temperature of the refrigerant is generally lower than the temperature due to the heat generated by the drive circuit 3. As a result, as the refrigerant flows inside the refrigerant pipe A, the drive circuit 3 is cooled.

In the refrigerant circuit 1, when the heating operation is performed, the refrigerant flows inside the refrigerant circuit 1 in a dotted arrow direction shown in FIG. 1. Accordingly, the refrigerant at the certain temperature T and the certain pressure P transmitted by the compressor 209 becomes a refrigerant at a temperature lower than the temperature T in the heat exchanger 101 that functions as a condenser in the heating operation. Further, the refrigerant at the temperature lower than the temperature T in the heat exchanger 101 flows inside the refrigerant pipe A that is in contact with the aluminum block 300 toward the outdoor unit 20 from the indoor unit 10. Here, the heat transferred to the refrigerant pipe A from the refrigerant at the temperature lower than the temperature T is transferred to the drive circuit 3 through the aluminum block 300. The temperature due to the heat transferred to the drive circuit 3 from the refrigerant is lower than the temperature due to the heat generated by the drive circuit 3. Thus, the drive circuit 3 is cooled. The refrigerant flows through the refrigerant pipe A, and then, flows into the electronic expansion valve 215. The electronic expansion valve 215 performs decompression adjustment and flow rate adjustment for the input liquid refrigerant under the control of the refrigerant circuit controller 217. The electronic expansion valve 215 turns the refrigerant into a refrigerant at a low pressure and a temperature lower than the temperature of the input liquid refrigerant. In a situation where the heating operation is performed, the refrigerant circuit controller 217 performs a defrost control for temporarily performing a cooling operation, in order to prevent freezing or frosting in the overcooling heat exchanger 205. For example, the refrigerant circuit controller 217 performs a defrost control for temporarily switching the operation to the cooling operation at a predetermined cycle. Further, for example, the refrigerant circuit controller 217 performs a defrost control for temporarily switching the operation to the cooling operation when an ambient temperature of the overcooling heat exchanger 205 is equal to or lower than a predetermined temperature. Further, for example, the refrigerant circuit controller 217 performs a defrost control for temporarily switching the operation to the cooling operation based on a relationship between the ambient temperature of the overcooling heat exchanger 205 and the temperature of the overcooling heat exchanger 205.

In the refrigerant circuit 1, when the cooling operation is performed, the refrigerant flows inside the refrigerant circuit 1 in a solid arrow direction shown in FIG. 1. Accordingly, the refrigerant at the certain temperature T and the pressure P transmitted by the compressor 209 becomes a refrigerant at a temperature lower than the temperature T in the heat exchanger 201 that functions as a condenser in the cooling operation. Here, the temperature of the refrigerant is higher than that of the overcooling heat exchanger 205 of which the temperature is reduced in the heating operation. Thus, the temperature of the overcooling heat exchanger 205 is increased. Thus, it is possible to prevent an operation stoppage of the overcooling heat exchanger 205 due to freezing, frosting, or the like. The overcooling heat exchanger 205 overcools the input refrigerant. The electronic expansion valve 215 performs decompression adjustment and flow rate adjustment of the input liquid refrigerant under the control of the refrigerant circuit controller 217. The electronic expansion valve 215 lowers the pressure and temperature of the input liquid refrigerant. The refrigerant at the low temperature and the low pressure due to the electronic expansion valve 215 flows inside the refrigerant pipe A that is in contact with the aluminum block 300 to which the drive circuit 3 is fixed toward the indoor unit 10 from the outdoor unit 20. Here, heat transferred to the refrigerant pipe A from the refrigerant is transferred to the drive circuit 3 through the aluminum block 300. The temperature due to the heat transferred to the drive circuit 3 from the refrigerant is lower than the temperature due to the heat transferred to the drive circuit 3 from the liquid refrigerant in the heating operation. Thus, when the cooling operation is temporarily performed by the defrost control in the heating operation, the temperature of the power element that forms the drive circuit 3 is greatly changed due to a temperature difference between the refrigerant in the heating operation and the refrigerant in the cooling operation. The large temperature change in the power element shortens the lifetime of the power element. Thus, it is preferable that a large temperature change does not occur in the power element.

A method for reducing a large temperature change that occurs in the power element when the cooling operation is temporarily performed by the defrost control in the heating operation will be described.

When the cooling operation is temporarily performed by the defrost control, the power element that forms the drive circuit 3 is cooled by a refrigerant at a lower temperature than in the heating operation. Here, the temperature of the power element that forms the drive circuit 3 is greatly changed.

Thus, the power element controller 218 according to this embodiment performs a control for increasing a loss of the power element that forms the drive circuit 3 compared with that in the heating operation while the refrigerant circuit controller 217 is performing the defrost control.

Specifically, for example, the power element controller 218 controls the drive circuit 3 so that the drive circuit 3 increases the frequency of electric current supplied to the compressor motor 210 compared with that in the heating operation while the refrigerant circuit controller 217 is performing the defrost control. With such a configuration, the power element that forms the drive circuit 3 generates heat, so that the cooling of the power element in the defrost control is moderated. Thus, the temperature change in the power element is reduced.

For example, the power element controller 218 controls the drive circuit 3 so that the drive circuit 3 controls the compressor motor 210 in a three-phase modulation manner while the refrigerant circuit controller 217 is performing the defrost control. With such a configuration, the power element that forms the drive circuit 3 generates heat, so that the cooling of the power element in the defrost control is moderated. Thus, the temperature change in the power element is reduced. Further, the power element controller 218 controls the drive circuit 3 so that the drive circuit 3 controls the compressor motor 210 in a two-phase modulation manner in the heating operation. With such a configuration, the drive circuit 3 can control the compressor motor 210 with high efficiency in the heating operation.

Further, for example, the power element controller 218 controls the drive circuit 3 so that a power factor of the drive circuit 3 is reduced compared with that in the heating operation while the refrigerant circuit controller 217 is performing the defrost control. Specifically, the power element controller 218 controls the drive circuit 3 so that a delay capacitor is connected to the drive circuit 3 while the defrost control is being performed, to thereby reduce the power factor and increase the electric current when the same power is used. With such a configuration, the power element that forms the drive circuit 3 generates heat, so that the cooling of the power element in the defrost control is moderated. Thus, the temperature change in the power element is reduced.

As described above, the power element controller 218 according to this embodiment performs the control for increasing the loss of the power element compared with that in the heating operation while the refrigerant circuit controller 217 is performing the defrost control. With such a configuration, the temperature change in the power element between the heating operation and the defrost control is reduced. As a result, the control device 216 can lengthen the lifetime of the power element.

As described above, the power element controller 218 performs the control for increasing the loss of the power element compared with that in the heating operation while the refrigerant circuit controller 217 is performing the defrost control. With such a configuration, a temperature change in another element disposed on a downstream side with respect to the refrigerant with reference to the position of the power element is reduced. As a specific example, a case where a solid arrow shown in FIG. 3 indicates a direction of the refrigerant that flows inside the refrigerant pipe A in the cooling operation will be described. In this case, the intelligent power module 301, the power transistor 302, and the diode 303 are disposed from the upstream side with respect to the refrigerant to the downstream side. Here, the power element controller 218 performs a control for increasing a loss of the intelligent power module 301 compared with that in the heating operation. Then, the temperature of the refrigerant is increased due to heat generated by the intelligent power module 301. The power transistor 302 and the diode 303 disposed on the downstream side with respect to the refrigerant with reference to the position of the intelligent power module 301 is cooled by the refrigerant of which the temperature is increased by the intelligent power module 301. As a result, a temperature change between the heating operation and the defrost control in the power transistor 302 and the diode 303 disposed on the downstream side with respect to the refrigerant with reference to the position of the intelligent power module 301 is reduced. As a result, the lifetimes of the power transistor 302 and the diode 303 are lengthened.

Further, the heat generated by the power element that forms the drive circuit 3 contributes to the temperature increase of the refrigerant in the defrost control, so that freezing or defrosting in the overcooling heat exchanger 205 does not easily occur.

The reduction of the temperature change in the power element due to the heat generated by the power element that forms the drive circuit 3 will be described.

It is assumed that a case temperature of the power element that forms the drive circuit 3 is Tc, and a junction temperature on a surface of a chip inside the case of the power element is Tj. As shown in FIG. 6, for example, it is assumed that a temperature difference of 20°C is present between the case temperature Tc and the junction temperature Tj.

A case where the case temperature Tc of the power element that forms the drive circuit 3 is 60°C in the heating operation and the case temperature Tc of the power element that forms the drive circuit 3 in the defrost control is cooled to 20°C will be described. In this case, the junction temperature Tj of the power element that forms the drive circuit 3 is changed from 80°C to 0°C. The power element controller 218 performs a control for increasing the temperature of the power element that forms the drive circuit 3 by 10°C compared with that in the heating operation while the refrigerant circuit controller 217 is performing the defrost control. Then, the junction temperature Tj at a temperature of 0°C in the heating operation is changed to 10°C. Due to the increase of the junction temperature Tj, the temperature change in the junction temperature of the power element that forms the drive circuit 3 is changed from 80°C to 70°C. As a result, the temperature change in the junction temperature is moderated by 10°C.

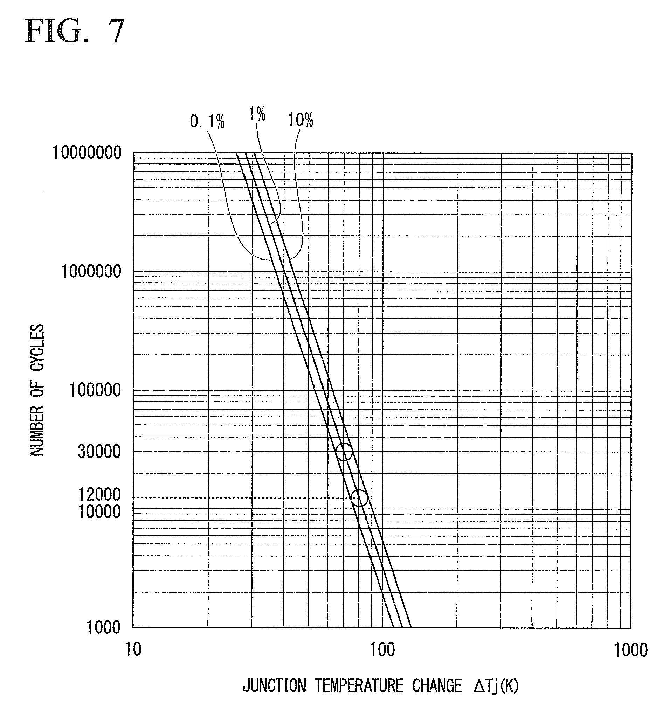

When the temperature change in the junction temperature of the power element is 80°C, with reference to a relationship between the temperature change in the junction temperature and the number of cycles shown in FIG. 7, the number of cycles is about 12000. When the temperature change in the junction temperature is 70°C, the number of cycles is about 30000. The power element controller 218 performs a control for increasing that temperature of the element power that forms the drive circuit 3 by 10°C compared with that in the heating operation while the refrigerant circuit controller 217 is performing the defrost control. In this case, the temperature change in the junction temperature of the power element is moderated by 10°C from 80°C to 70°C. As a result, the lifetime of the power element increases by 2.5 times.

Hereinbefore, the processes of the control device 216 according to this embodiment have been described. According to the processes of the control device 216 according to this embodiment, the refrigerant circuit controller 217 performs the defrost control for temporarily performing the cooling operation in the heating operation, in the refrigerant circuit 1. The power element controller 218 performs the control for increasing the loss of the power element compared with that in the heating operation while the refrigerant circuit controller 217 is performing the defrost control.

With such a configuration, in the refrigerant circuit 1, the temperature change in the power element generated when performing the defrost control for temporarily performing the cooling operation in the heating operation is reduced. As a result, the control device 216 can lengthen the lifetime of the power element.

The embodiments of the invention have been described, but the control device 216 includes a computer system therein. Further, a procedure of the above-described processes is stored in a computer-readable recording medium in a program format, and when the computer reads and executes the program, the processes are performed. Here, the computer-readable recording medium refers to a magnetic disk, a magneto-optical disc, a CD-ROM, a DVD-ROM, a semiconductor memory, or the like. Further, the computer program may be distributed to the computer through a communication line, and the computer that receives the distribution may execute the program.

Further, the program may realize a part of the above-described functions. In addition, the program may be a file capable of being realized by a combination with a program which is stored in advance in the computer system, a so-called differential file (differential program).

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. A control device (216) comprising:
a refrigerant circuit controller (217) that increases a temperature of a heat exchanger (201) in a cooling operation, the cooling operation being temporarily performed during a heating operation; and
a power element controller (218) that increases a loss of a power element in the cooling operation compared with a loss of the power element in the heating operation, the power element forming an inverter circuit (3) that controls a compressor motor (210).

2. The control device according to claim 1, wherein the power element controller (218) increases a switching frequency of the inverter circuit (3) in the cooling operation compared with a switching frequency of the inverter circuit (3) in the heating operation.

3. The control device according to claim 1 or 2, wherein
the power element controller (218) controls the compressor motor (210) in a three-phase modulation manner in the cooling operation, and
the power element controller controls (218) the compressor motor (210) in a two-phase modulation manner in the heating operation.

4. The control device according to claim 1 or 3, wherein the power element controller (218) decreases a power factor of the inverter circuit (3) in the cooling operation compared with a power factor of the inverter circuit (3) in the heating operation.

5. A control method comprising:
increasing a temperature of a heat exchanger (201) in a cooling operation, the cooling operation being temporarily performed during a heating operation; and
increasing a loss of a power element in the cooling operation compared with a loss of the power element in the heating operation, the power element forming an inverter circuit (3) that controls a compressor motor (210).

6. A program that causes a computer to execute:
increasing a temperature of a heat exchanger in a cooling operation, the cooling operation being temporarily performed during a heating operation; and
increasing a loss of a power element in the cooling operation compared with a loss of the power element in the heating operation, the power element forming an inverter circuit that controls a compressor motor.

7. A computer program product loadable directly into a memory of a computing system, comprising software code portions for the execution of the control method according to claim 5 when said program is executed on said computing system.

8. Medium readable by a computing system, having computer-executable instructions adapted for effecting the execution by the computing system of the control method according to claim 5.
